# EUROPEAN PATENT APPLICATION

(11) **EP 4 239 775 A2**
(43) Date of publication of application: **06.09.2023**
(21) Application number: 23155770.3
(22) Date of filing: 09.02.2023
(51) Int. Cl.: H01M 50/244, H01M 50/333, H01M 50/392, B65D 85/30

(54) **A CONTAINER SYSTEM ARRANGED FOR STORING AND/OR TRANSPORTING A RECHARGEABLE BATTERY AND A METHOD OF STORING AND/OR TRANSPORTING THE RECHARGEABLE BATTERY**

(30) Priority: 09.02.2022 NL 2030862; 09.02.2022 NL 2030863
(71) Applicant: VDL Staalservice B.V., 6003 DG Weert (NL)
(72) Inventor: DEKKERS, Lambert Cornelis, WEERT (NL); MALCONTENT, Paul Emeri, WEERT (NL)
(74) Representative: Algemeen Octrooi- en Merkenbureau B.V.

(57) **Abstract**

A container system (1) arranged for storing and/or transporting a rechargeable battery (2), such as a lithium-ion battery, wherein said container system (1) comprises a supporting assembly (31) arranged for supporting said container system on a ground surface and comprising a support surface arranged for supporting said rechargeable battery (2), a covering assembly (35), removably attachable to said supporting assembly (31), provided with a receiving space (7) arranged for receiving, via a receiving opening (5) of said covering assembly (35), said rechargeable battery (2) and a method (100) of storing and/or transporting a rechargeable battery, such as a lithium-ion battery , wherein said side wall arrangement (9) is provided with a through hole (11) and a filtering arrangement (13). A method (100) of storing and/or transporting a rechargeable battery (2).

## Description

According to a first aspect, the present disclosure relates to a container system arranged for storing and/or transporting a battery.

According to a second aspect, the present disclosure relates to a method of storing and/or transporting a rechargeable battery, such as a lithium-ion battery, using a container system according to the first aspect of the present disclosure.

It is known that a rechargeable battery, such as lithium-ion battery, is prone to thermal runaway. Thermal runaway is a process that is accelerated by increased temperature, in turn releasing energy that further increases temperature. Thermal runaway occurs in situations where an increase in temperature changes the conditions in a way that causes a further increase in temperature, often leading to an overheating of the rechargeable battery. In particular when the cells of the battery are sealed an explosion may occur if safety vents are overwhelmed or non-functional.

It is an object of the present disclosure to provide for a system for storing and/or transporting a rechargeable battery in a relative safe manner.

The container system according to the present disclosure comprises:
- a supporting assembly arranged for supporting said container system on a ground surface and comprising a support surface arranged for supporting said rechargeable battery;
- a covering assembly, removably attachable to said supporting assembly.

The covering assembly is provided with a receiving space arranged for receiving, via a receiving opening of said covering assembly, said rechargeable battery, wherein said receiving space is partly delimited by a side wall arrangement and a top wall arrangement, wherein said receiving opening is provided at a side of said covering assembly opposite to said top wall arrangement, wherein, in an assembled condition of said container system, said top wall arrangement is connected, via said side wall arrangement, to said supporting assembly, wherein said side wall arrangement (9) is provided with a through hole (11); and
- a filtering arrangement (13) provided outside said receiving space (7) and arranged for receiving gasses (4), via said through hole (11), from said rechargeable battery (2) and filtering said gasses (4) originating from said rechargeable battery (2), wherein said filtering arrangement (13) is provided with a filter material (15) comprising glass fibres, preferably amorphous glass fibres.

By providing the supporting assembly with the supporting surface, the rechargeable battery may be placed onto the supporting surface, without being hampered by side walls of the covering assembly. This is beneficial for providing a user of the container system with a relative high level of convenience when handling a relative large and/or a relative heavy rechargeable battery.

The present disclosure relies at least partly on the insight that relative large amounts of hydrogen fluoride may be generated during a thermal runaway of a rechargeable battery, in particular during thermal runaway of a lithium-ion battery. In addition, other potentially toxic gasses, such as phosphoryl fluoride, may be generated during a thermal runaway of a rechargeable battery, in particular during thermal runaway of a lithium-ion battery. Thermal runaway may be due to a mechanical impact or deformation of the rechargeable battery. For this reason, a container system that reduces the risk of a mechanical impact or deformation of the rechargeable battery is beneficial for avoiding, or at least reducing the risk, of a thermal runaway.

In this regard, it is pointed out that phosphoryl fluoride may hydrolyze relatively rapidly to hydrogen fluoride, thereby increasing the generation of hydrogen fluoride during a thermal runaway.

It is noted that the through hole that is provided in the side wall arrangement of the covering assembly does not correspond to the receiving opening of the covering assembly. In other words, the through hole, via which the filtering arrangement receives the gasses from the receiving space, is not arranged for providing the rechargeable battery in the receiving space.

By providing a filter material comprising glass fibres, preferably amorphous glass fibres, the hydrogen fluoride that is generated may be collected, at least partly, by the glass fibres, thereby avoiding hydrogen fluoride gas to escape to a surrounding of the container system, or at least reducing the amount of hydrogen fluoride escaping to the surrounding of the container system.

By providing a separate supporting assembly that is attachable to the covering assembly, the risk of a mechanical impact or deformation of the rechargeable battery is significantly reduced, thereby providing for a system for storing and/or transporting a rechargeable battery in a relative safe manner.

The covering assembly may be placed onto the supporting assembly, thereby surrounding the rechargeable battery, together with the supporting assembly on all sides of the rechargeable battery, while avoiding, or at least significantly reducing, the risk of a mechanical impact or deformation of the rechargeable battery when providing the rechargeable battery in the receiving space.

Preferably, said supporting assembly comprises a lower surface arranged for supporting said container system on said ground surface, wherein said support surface is arranged at a side of said supporting assembly facing away from said lower surface.

Preferably, said supporting surface is, during use, provided on an upper side of said supporting assembly.

Preferably, said supporting assembly is free from vertical walls that delimit said supporting surface and said receiving space. This is beneficial for reducing the risk of a mechanical impact or deformation of the rechargeable battery, thereby providing for a system for storing and/or transporting a rechargeable battery in a relative safe manner.

Preferably, said receiving opening is, during use, provided at a bottom side of said covering assembly. This is beneficial for allowing said covering assembly to be lowered onto said support surface and simultaneously realise that the rechargeable battery is surrounded by the covering assembly and the supporting assembly.

By providing the receiving opening, during use, at the bottom side is beneficial for realising a container system that is relatively compact and of relative low weight.

The present disclosure relies at least partly on the insight that it is beneficial to avoid the need for a separate door or hatch to provide access to the receiving space. Instead, the container system according to the present disclosure relies at least partly on the weight of the covering assembly for closing the receiving space in a relative robust manner.

Preferably, said container system comprises a pressure release arrangement arranged to maintain a pressure in said receiving space below a predetermined pressure value.

It is noted that when a rechargeable battery experiences a thermal runaway the pressure in the closed space can increase quite rapidly to a relative high pressure. In such conditions of increasing pressure, irreversible damage to the container system is prevented by providing the pressure release arrangement.

In this regard, it is beneficial if said pressure release arrangement comprises a pressure relief valve. A pressure relief valve is beneficial for allowing to maintain the pressure in the receiving space below a predetermined pressure level such that damage of the container system is prevented.

Preferably, said pressure relief valve comprises an urging element, such as a spring, for biasing said pressure relief valve to a closed position wherein said pressure relief valve is closed. Providing an urging element is beneficial for realising that any gasses, originating from the rechargeable battery, are maintained in the receiving space, as long as the pressure is below the predetermined pressure level. This is beneficial for avoiding, or at least reducing the risk, of a hazardous situation for users of the container system in case the rechargeable battery that is provided in the receiving space is producing toxic gasses without experiencing a rapid thermal runaway that results in a relative high pressure increase in the receiving space.

Preferably, said urging element biases said pressure relief valve to said closed position with a predetermined force. Biasing the pressure relief valve with the predetermined force is beneficial for maintaining the pressure in said receiving space below the predetermined pressure value. By providing a larger predetermined force, a higher predetermined pressure value may be reached in the receiving space. As such, the urging element may be used for setting the predetermined pressure value.

It is beneficial if one of said supporting assembly and said covering assembly comprises a sealing arrangement for detachably sealing said supporting assembly and said covering assembly. This is beneficial for avoiding, or at least reducing the risk of, a hazardous situation occurring due to an opening between the supporting assembly and the covering assembly, thereby providing for a system for storing and/or transporting a rechargeable battery in a relative safe manner.

In this regard, it is beneficial if said sealing arrangement is arranged for realizing a hermitic seal of said sealing supporting assembly and said covering assembly. This is beneficial for avoiding, or at least reducing the risk of, a gasses escaping the receiving space due to an opening between the supporting assembly and the covering assembly, thereby providing for a system for storing and/or transporting a rechargeable battery in a relative safe manner.

Preferably, said sealing arrangement comprises a rubber, preferably a silicone rubber. This is beneficial for realising a relative good sealing between the supporting assembly and the covering assembly that is resistant to gasses and liquids that may originate from the rechargeable battery during a thermal runaway.

Preferably, said supporting assembly comprises fastening organs for receiving a fastening element for fastening said rechargeable battery, by said fastening element, to said supporting assembly. This is beneficial for maintaining the rechargeable battery in a predetermined position relative to the supporting assembly, thereby reducing risk of a mechanical impact or deformation of the rechargeable battery during transport.

In this regard, it is beneficial if said container system comprises said fastening element, wherein said fastening element comprises an elongate flexible organ. The flexible organ may for instance be formed by a strap provided with hooks that may be hooked to the fastening element. Alternatively, the fastening element may be formed as a hook, wherein the flexible organ is provided with washers.

In an embodiment of the container system according to the present disclosure, said covering assembly comprises a receiving space arranged to receive a lifting organ, such as forks of a fork lift truck, for lifting said covering assembly, by said lifting organ, from said supporting assembly and/or placing said covering assembly, by said lifting organ, onto said supporting assembly.

Preferably, said supporting assembly comprises a further lifting section arranged for receiving a further lifting organ, such as forks of a fork lift truck, for lifting and moving, by said further lifting organ, said supporting assembly and/or said container system.

It is noted that in an embodiment of the container system, both the lifting section and the further lifting section are arranged such that the forks of the same fork lift truck may be received. This is beneficial for allowing a user to handle the supporting assembly, the covering assembly and the container system using one fork lift truck.

Preferably, said container system comprises a fixating arrangement arranged for fixating said covering assembly in a predetermined position relative to said supporting assembly. This is beneficial for maintaining the covering assembly in a predetermined position relative to the supporting assembly, thereby reducing risk of a mechanical impact or deformation of the rechargeable battery during transport and/or reducing the risk of displacement of the covering assembly relative to the supporting assembly that may cause an opening between the covering assembly and the supporting assembly.

In this regard, it is advantageous, if said fixating arrangement comprises a first coupling organ fixedly connected to said supporting assembly and a second coupling organ fixedly connected to said covering assembly, wherein said first coupling organ and said second coupling organ are detachably connectable for fixating said covering assembly in said predetermined position relative to said supporting assembly. Preferably, said first coupling organ is hook-shaped.

In an embodiment of the container system according to the present disclosure, a width and a length of said supporting assembly is according to a standardized dimension of a pallet, such as according to ISO Standard 6780:2003, or a multiple of said standardized dimension. This is beneficial for allowing the container system to be handled and positioned according to well-known practices for pallets.

Preferably, said side wall arrangement and/or said top wall arrangement comprise an insulation material for thermally insulating said receiving space from a surrounding of said container system.

In this regard, it is beneficial if said insulation material is provided along a full width and length of said side wall arrangement and/or said top wall arrangement. This is beneficial for realizing a relative good thermal insulation.

It is noted that during a thermal runaway of a rechargeable battery, temperatures in excess of 400 °C may occur. For safety reasons it is desirable that a temperature of the outer surfaces of the container system, during a thermal runaway, remains at a relative low temperature.

Preferably, said insulation material comprising glass fibres, preferably amorphous glass fibres. By providing an insulation material comprising glass fibres, preferably amorphous glass fibres, the hydrogen fluoride that is generated may be collected, at least partly, by the glass fibres, thereby avoiding hydrogen fluoride gas to escape to a surrounding of the container system, or at least reducing the amount of hydrogen fluoride escaping to the surrounding of the container system.

Preferably, said insulation material is provided outside said receiving space and arranged for receiving gasses, via a through hole, from said rechargeable battery and filtering said gasses originating from said rechargeable battery.

Preferably, said through hole is provided in said side wall arrangement or said top wall arrangement.

In an embodiment, said insulation material comprises SiO₂ in an amount between 70.0 wt.% and 80.0 wt.% based on the weight of the insulation material. An amount of SiO2 between 70.0 wt.% and 80.0 wt.% is beneficial for realizing a relative large capacity of the container system for filtering gasses exhausted from said receiving space, in particular for realizing a relative large capacity of filtering hydrogen fluoride gas.

Preferably said insulation material comprises CaO and MgO in a combined amount of between 20.0 wt.% and 30.0 wt.%, based on the weight of the insulation material.

Preferably, a thermal conductivity of said insulation material is 0.06 W/mK to 0.16 W/mK in the range of 200 °C to 600 °C, wherein said thermal conductivity is determined according to ASTM C-201. A thermal conductivity in this range is beneficial for realising a relative good thermal insulation of said receiving space from the surrounding of the container system while allowing to realize a relative compact container system.

Preferably, a thickness of said insulation material is in the range of 38 mm to 60 mm, more preferably 50 mm. A thickness in this range is beneficial for realising a relative good thermal insulation of said receiving space from the surrounding of the container system while realizing a relative large capacity of the container system for filtering gasses exhausted from said receiving space, in particular for realizing a relative large capacity of filtering hydrogen fluoride gas.

In a practical embodiment of the container system according to the present disclosure a mean fibre diameter of the glass fibres is in the range of 3.2 µm to 3.8 µm.

Preferably, said supporting assembly comprises further insulation material arranged to thermally insulate said receiving space, at a bottom side of said receiving space, from a surrounding of said container system.

In this regard, it is beneficial if said further insulation material is identical to said insulation material comprised by said side wall arrangement and/or said top wall arrangement.

Preferably, said covering assembly comprises first alignment organs and the supporting assembly comprises second alignment organs, wherein said first alignment organs and said second alignment organs are arranged for cooperating to align said covering assembly relative to said supporting assembly during placement of said covering assembly onto said supporting assembly.

Preferably, said filter material comprises SiO2 in an amount between 70.0 wt.% and 80.0 wt.%. based on the weight of the filter material. An amount of SiO2 between 70.0 wt.% and 80.0 wt.% is beneficial for realizing a relative large capacity of the container system for filtering gasses exhausted from said receiving space, in particular for realizing a relative capacity of filtering hydrogen fluoride gas.

In an embodiment, said filter material comprises CaO and MgO in a combined amount of between 20.0 wt.% and 30.0 wt.%, based on the weight of the filter material.

Preferably, said filter material is provided along a full width and length of said wall. This is beneficial for realizing a relative large capacity for filtering said gasses.

In a practical embodiment of the container system according to the present disclosure, said filtering material is further arranged for thermally insulating said receiving space from a surrounding of said container system.

Preferably, a thermal conductivity of said filtering material is 0.06 W/mK to 0.16 10 W/mK in the range of 200 °C to 600 °C, wherein said thermal conductivity is determined according to ASTM C-201. A thermal conductivity in this range is beneficial for realising a relative good thermal insulation of the receiving space from the surrounding of the container system while allowing to realize a relative compact container system.

Preferably, a thickness of said insulation material is in the range of 38 mm to 60 mm, more preferably 50 mm. A thickness in this range is beneficial for realising a relative good thermal insulation of the receiving space from the surrounding of the container system while realizing a relative large capacity of the container system for filtering gasses exhausted from said receiving space, in particular for realizing a relative large capacity of filtering hydrogen fluoride gas.

Preferably, said filter material comprises an alkaline earth silicate wool. This is beneficial for realising a relative good thermal insulation while realizing a relative large capacity of the container system for filtering gasses exhausted from said receiving space, in particular for realizing a relative large capacity of filtering hydrogen fluoride gas.

Preferably, a mean fiber diameter of said glass fiber is in the range of 3.2 µm 30 to 3.8 µm. This is beneficial for realizing a relative high rate of filtering the gasses exhausted from the receiving space.

It is advantageous if said container system further comprises:
- a degassing arrangement arranged for exhausting of gasses, filtered by said filtering arrangement, originating from said rechargeable battery, from said container system.

Providing a degassing arrangement is beneficial for allowing filtered gasses to be exhausted from the container system, thereby avoiding, or at least reducing the risk of a relative high pressure increase in the receiving space and/or the filter material. A relative high pressure in the receiving space and/or the filter material may cause damage to the container system.

Preferably, said degassing arrangement comprises said pressure relief valve, wherein said pressure relief valve is biased to a closed position wherein exhausting of gasses originating from said receiving space is blocked. A pressure relief valve is beneficial for allowing to maintain the pressure in the receiving space below a predetermined pressure level such that damage of the container system is prevented.

In this regard, it is advantageous if, said urging element biases said pressure relief valve to said closed position with a predetermined force such that a maximum pressure in said receiving space of said holder is in the range of 0.05 - 0.15 barg, preferably 0.1 barg.

Preferably, said holder comprises a top wall arrangement provided with a ventilation space arranged such that gasses originating from said receiving space are exhausted from said container system, via said ventilation space.

In this regard, it is beneficial if said ventilation space is arranged such that gasses originating from said receiving space, are exhausted from said container system, via said pressure relief valve.

In this regard, it is beneficial if said ventilation space is divided by partition walls, wherein said partition walls are provided at a mutual distance such that a lifting organ, such as forks of a fork lift truck, can be received, between neighbouring partition walls, in a lifting section of said ventilation space for lifting at least a part of said container system.

Preferably, said pressure relief valve is provided at a side of said neighbouring partition walls facing away from said lifting section. This is beneficial for avoiding, or at least reducing the risk of damaging the pressure relief valve by the lifting organ. In addition, this reduces the risk of direct exposure of a gasses and/or material that may be ejected, via the pressure relief valve, from the container system during a thermal runaway or explosion of the battery.

According to a second aspect, the present disclosure relates to a method of storing and/or transporting a rechargeable battery, such as a lithium-ion battery, using a container system according to any one of the preceding claims, said method comprising the steps of:
- supporting, by said supporting surface of said supporting assembly, said rechargeable battery;
- lowering said covering assembly over said rechargeable battery onto said supporting assembly and receiving said rechargeable battery in said receiving space.

Embodiments of the container system according to the first aspect of the present disclosure as presented previously are also applicable to the method according to the second aspect of the present disclosure, and vice versa.

Effects of the container system according to the first aspect of the present disclosure as presented above correspond to or are similar to effects of the method according to the second aspect of the present disclosure.

Preferably, the method further comprises the steps of:
- providing a plurality of container systems according to the first aspect of the present disclosure, wherein said receiving space of containers systems of said plurality of container systems have different predetermined volumes;
- determining a maximum energy storage capacity in kilowatt-hour of said rechargeable battery;
- selecting a container system of said plurality of container systems provided with a predetermined volume of said receiving space is in the range of 5 - 15 times said energy storage capacity in kilowatt-hour multiplied by 1 dm3 and divided by 1 kWh.

In other words, if the energy storage capacity of the battery is 10 kilowatt-hour, the predetermined volume of the selected container system, during the step of selecting, is in the range of 50 - 150 dm3.

In an embodiment of the method, during the step of selecting, a container system of said plurality of container systems provided with a predetermined volume of said receiving space is selected having a predetermined volume in the range of 9 - 11 times said energy storage capacity in kilowatt-hour multiplied by 1 dm3 and divided by 1 kWh.

Preferably, the steps of providing, determining and selecting are subsequent steps and performed before the steps of supporting and lowering.

It is advantageous if, the step of providing, comprises providing container systems having a predetermined volume of said receiving space in the range of 450 dm3 to 2500 dm3.

The present disclosure will now be explained by means of a description of preferred embodiments of the container system and the method, in which reference is made to the following schematic figures, in which:
Fig. 1: discloses an isometric view of a container system in accordance with the present disclosure;
Fig. 2: discloses schematically a front view of the container system of Fig. 1;
Fig. 3: discloses an exploded view of the container system of Fig. 1;
Fig. 4: discloses an isometric view of a covering assembly of a container system in accordance with the present disclosure;
Fig. 5: discloses a partial isometric view of a container system according to the present disclosure, wherein a side covering surface is removed;
Fig. 6: discloses a covering assembly according to the present disclosure wherein a top covering surface has been removed in order to illustrate the pressure relief arrangement;
Fig. 7a: discloses schematically elements of a degassing arrangement of a
container system in accordance with the present disclosure, wherein a pressure relief valve is in a closed position;
Fig. 7b: discloses schematically elements of the degassing arrangement of fig. 6A, wherein the pressure relief valve is in a opened position;
Fig. 8: A method according to the second aspect of the present disclosure;
Fig. 9: A method according to the second aspect of the present disclosure.

The container system 1 is arranged for safely storing and/or transporting a rechargeable battery 2, such as a lithium-ion battery. In particular, the container system 1 is arranged for storing and/or transporting a rechargeable battery 2 that may experience a state of thermal runaway.

The container system 1 comprises a holder 3 for receiving the rechargeable battery 2 in a receiving space 7 of the holder 3. For example, the rechargeable battery 2 is a lithium Ion battery. The holder 3 comprises a supporting assembly 31, for supporting the container system 1 on a ground surface, and a covering assembly 35, removably attachable to the supporting assembly 31. The width W and the length L of the supporting assembly 31 and the covering assembly 35 may be according to ISO Standard 6780:2003, wherein standard sizes are for example 80 x 120 cm, 100 x 120 cm, 160 x 120 cm, and 240 x 120 cm or an alternative standard comprising dimensions of a pallet. The container system 1 may be made available in different heights H.

The supporting assembly 31 comprises a support surface 33 arranged for supporting the rechargeable battery 2. The support surface 33 is provided with fastening organs 37 for fastening the rechargeable battery 2 to the supporting assembly 31. Using the fastening organs 37, the rechargeable battery 2 is fixated with four straps, such that the container system 1 is flexible for different sizes and models of rechargeable batteries 2. The fastening organs 37 may be, for example, loops or anchoring points such as hook which facilitate a fastening element (not shown in figures) to pass through and/or to be attached to. For example, the fastening element comprises an elongate flexible organ. A suitable fastening element is an elastic strip or a belt or similar elements that facilitate the batteries to remain securely attached to said supporting surface.

The supporting assembly 31 comprises further lifting sections 39 for receiving forks of a fork lift truck, in order for safely lifting and moving the supporting assembly 31. The further lifting sections 39 are provided at the front and the back side (the side extending in the length L of the supporting assembly 31), as well at the left and the right side (the side extending in the width W of the supporting assembly 31), of the container system 1, such that the container system 1 is reachable by a fork lift truck from either of the four sides of the container system 1.

For stacking multiple container systems 1 on top of each other, the covering assembly 35 comprises four further aligning arrangements 43A, 43B, for aligning the supporting assembly 31 of one container system 1 in a predetermined position relative to the covering assembly 35 of another container system 1. Each further aligning arrangement 43A, 43B comprises a protrusion 43A provided at the upper part of the covering assembly 35 and arranged for receiving in a corresponding receiving space 43B in the bottom part of the supporting assembly 31.

The covering assembly 35 also comprises a pressure release arrangement 19 arranged to maintain a pressure in said receiving space 7 below a predetermined pressure value. The pressure release arrangement 19 comprises a pressure relief valve 19. The pressure relief valve 19 comprises an urging element, such as a spring, for biasing the pressure relief valve 19 to a closed position with a predetermined force. This predetermined force may be determined by the spring constant, for example.

Such a pressure release arrangement 19 may become necessary when the battery 2 that is being transported and/or stored enters in a state of thermal runaway and as a result emanates toxic gases. If the battery continues to remain in a pressurized environment, it could lead to an explosion or any other hazardous occurrence. In order to overcome such a situation, the gases may be allowed to escape through the pressure relief valve 19.

Additionally any one of the supporting assembly 31 and the covering assembly 35 comprises a sealing arrangement 14 for detachably sealing said supporting assembly 31 and said covering assembly 35. The sealing arrangement 14 is arranged for realizing a hermitic seal between the supporting assembly 31 and the covering assembly 35. The sealing arrangement 14 comprises a silicone rubber. Such a sealing arrangement 14 is beneficial in that it may prevent the leakage of any gases or liquids as a result of thermal runaway of the battery 2.

The covering assembly 35 is provided with the receiving space 7 and a receiving opening 5, wherein the receiving opening 5 is closable by the supporting assembly 31. The container system 1 comprises four alignment arrangements 41A, 41B, for aligning the covering assembly 35 in a predetermined position relative to the supporting assembly 31. In the embodiment of the figures, each alignment arrangement 41A, 41B comprises multiple elements, one protrusion 41A provided in the bottom part of the covering assembly 35 and arranged for receiving in a corresponding receiving space 41B in the upper part of the supporting assembly 31, and another protrusion 41A provided at the upper part of the supporting assembly 31 and arranged for receiving in a corresponding receiving space 41B in the bottom part of the covering assembly.

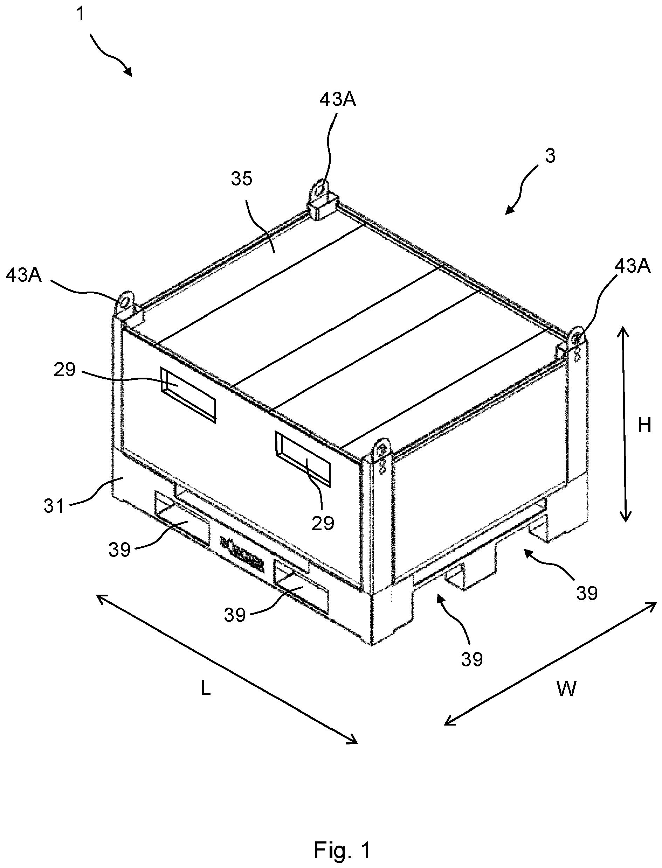

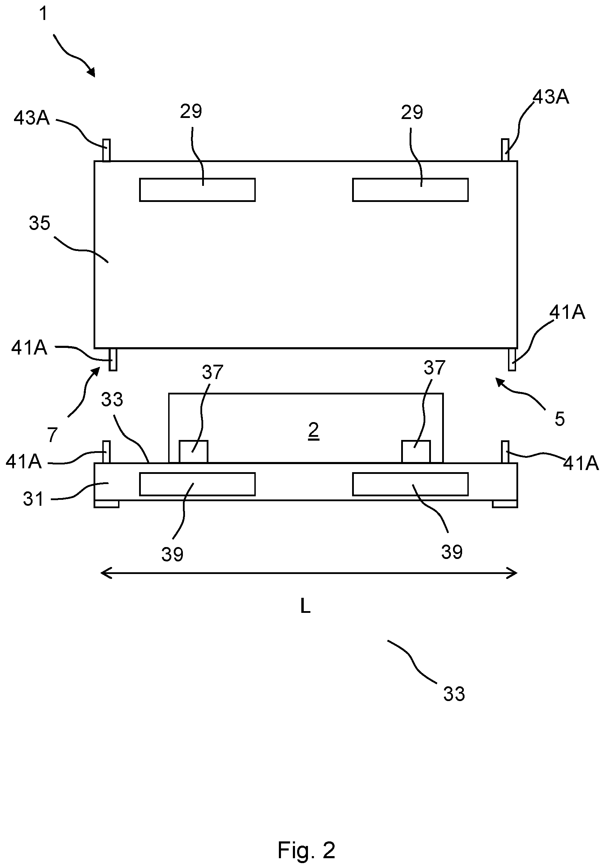

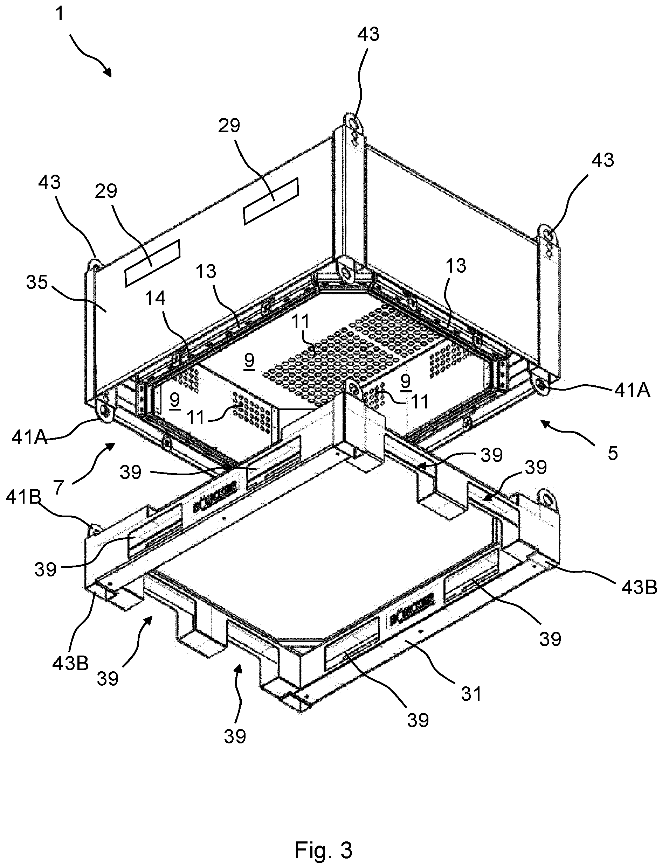

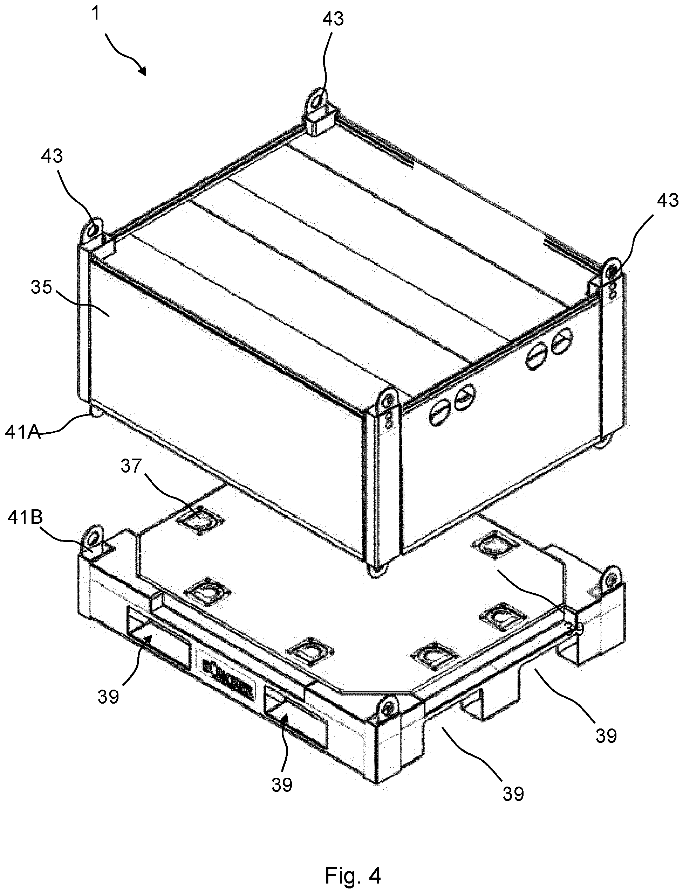

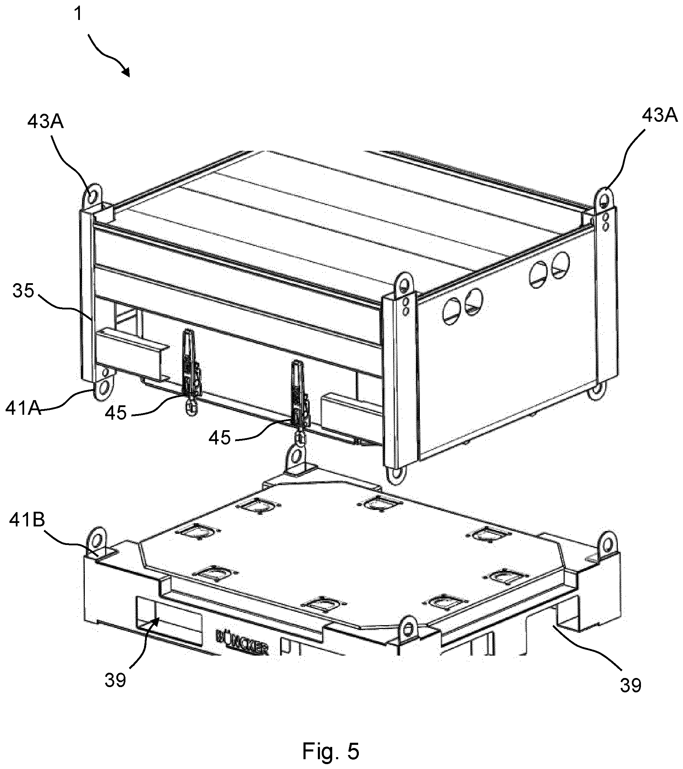

The covering assembly 35 furthermore comprises a lifting section 29 for receiving forks of a fork lift truck, in order for safely lifting and moving the covering assembly 35 on top of and from the supporting assembly 31. Note that, in the embodiment of figures 1, 2 and 3, the lifting sections 29 are provided at the front and back side (the side extending in the length L of the covering assembly 35), of the container system 1, and in the embodiment of figures 4 and 5, the lifting sections 29 are provided at the left and right side (the side extending in the width W of the covering assembly 35), of the container system 1.

The container system 1 may further comprise a fixating arrangement 45 arranged for fixating said covering assembly 35 in a predetermined position relative to said supporting assembly 31. The fixating arrangement 45 ensures that the covering assembly 35 is attached to the supporting assembly 31 in a secure manner.

For example, the fixating arrangement 45 comprises a first coupling organ fixedly connected to the supporting assembly 31 and a second coupling organ fixedly connected to the covering assembly 35, wherein the first coupling organ and the second coupling organ are detachably connectable to each other for fixating the covering assembly 35 in the predetermined position relative to the supporting assembly 31. As an example, the first coupling organ is a hook and the second coupling organ is a latch to which the hook can be detachably connected.

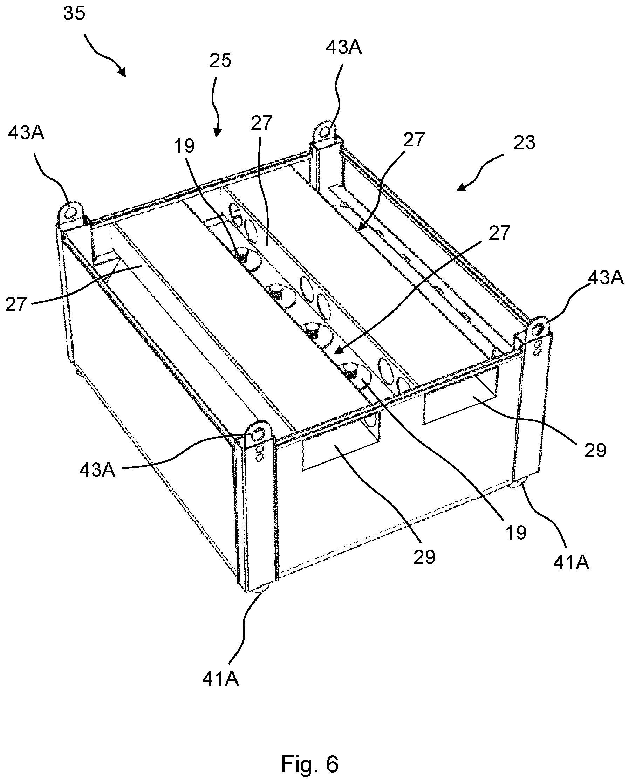

The covering assembly 35 comprises a filtering arrangement 13 provided outside the receiving space 7. The filtering arrangement 13 and the receiving space 7 are separated by side walls 9 and an upper wall 9, each wall 9 is provided with a plurality of through holes 11, schematically shown in more detail in figures 6A and 6B. The filtering arrangement 13 is arranged for receiving gasses 4, via the through holes 11, from the receiving space 7 in which the rechargeable battery 2 is stored.

The filtering arrangement 13 is arranged for filtering the gasses 4, in particular toxic gasses 4 originating from the rechargeable battery 2 that is in a state of thermal runaway, wherein the filtering arrangement 13 is provided with a filter material 15 comprising amorphous glass fibres.

The filtering material 15 comprises silicon dioxide, SiO2, in an amount between 70.0 wt.% and 80.0 wt.% and calcium oxide, CaO, and magnesium oxide, MgO, in a combined amount of between 20.0 wt.% and 30.0 wt.%, based on the weight of the filter material 15. The mean fibre diameter of the amorphous glass fibres is in the range 30 of 3.2 µm to 3.8 µm.

Furthermore, the covering assembly 35 comprises a side wall arrangement 9 and a top wall arrangement 10 that both comprise the filtering material 15 is further arranged for thermally insulating the receiving space 7 from a surrounding of the container system 1. The filtering material 15 is thus arranged for thermally insulating the receiving space 7 from a surrounding of the container system 1, either for protecting the surrounding for extreme heat generated by the rechargeable battery 2 that may enter a state of thermal runaway stored in the receiving space 7, as well as protecting the rechargeable battery 2 stored in the receiving space 7 for extreme heat, for example in case of fire, originated in the surrounding. The thermal conductivity of the filtering material 15 is 0.06 W/mK to 0.16 W/mK in the range of 200 °C to 600 °C, determined according to ASTM C-201.

Additionally, the supporting assembly 31 may comprise further insulation material arranged to thermally insulate said receiving space, at a bottom side of said receiving space, from a surrounding of said container system 1. It may be understood that the insulation material used in the bottom side of the receiving space may be similar to that used in the top and/or side wall arrangements.

The container system 1 comprises a degassing arrangement 17 arranged for exhausting of gasses 4 from the container system 1. Toxic gasses 4 originating from the rechargeable battery 2 that is in a state of thermal runaway, are exhausted from the container system 1, via the through holes 11, the filtering arrangement 13, and one or more pressure relief valves 19. While flowing through the filtering arrangement 13, the toxic gasses 4 are filtered by the filter material 15.

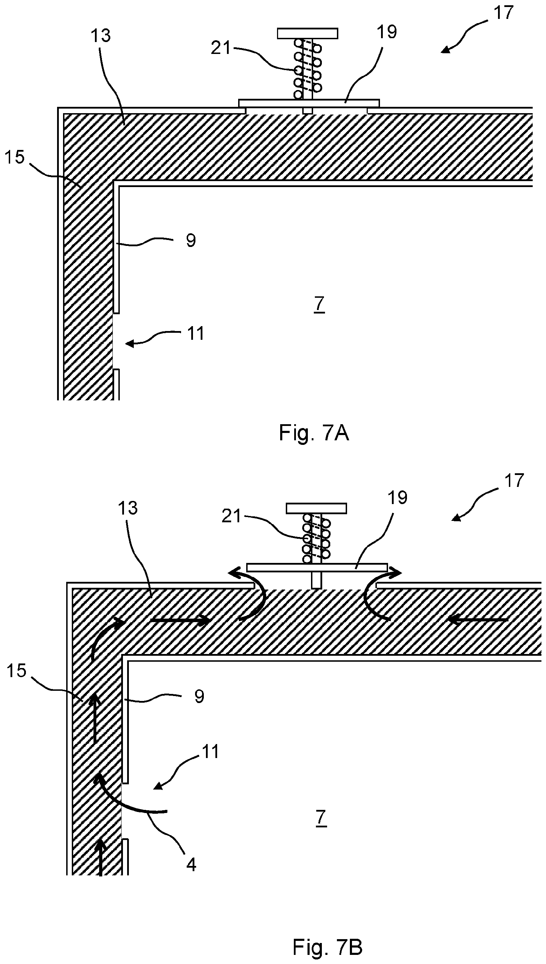

The pressure relief valve 19 is biased to a closed position by a spring 21, as indicated in figure 7A. In the closed position of the pressure relief valve 19, exhausting of gasses 4 originating from the receiving space 7 is blocked. The spring 21 biases the pressure relief valve 19 to the closed position with a predetermined force such that a maximum pressure in the receiving space 7 is 0.1 barg. When the maximum pressure in the receiving space 7 exceeds 0.1 barg, the pressure relief valve 19 is forced to the opened position, as indicated in figure 7B, wherein the gasses 4 are exhausted from the container system 1, via the filtering arrangement 13.

The covering assembly 35 of the container system 1 comprises a top wall arrangement 23 provided with a ventilation space 25, wherein the ventilation space 25 is divided by partition walls 27. The partition walls 27 are provided at a mutual distance and separate the ventilation space 25 from the lifting sections 29, wherein the pressure relief valves 19 are provided at a side of the neighbouring partition walls 27 facing away from the lifting section 29. The partition walls 27 comprise further through holes 47, such that gasses 4, originating from the receiving space 7, are exhausted from the container system 1, via the pressure relief valves 19 and via the ventilation space 25.

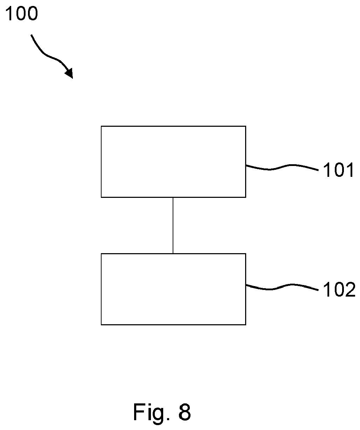

Fig. 8 illustrates method 100 of storing and/or transporting a rechargeable battery 2, such as a lithium-ion battery, using a container system 1 according to the present disclosure. The method 100 comprises the steps of supporting 101, by the supporting surface 33 of the supporting assembly 31, the rechargeable battery 2, and a subsequent step of lowering 102 the covering assembly 35 over the rechargeable battery 2 onto the supporting assembly 31 and receiving the rechargeable battery 2 in the receiving space 7.

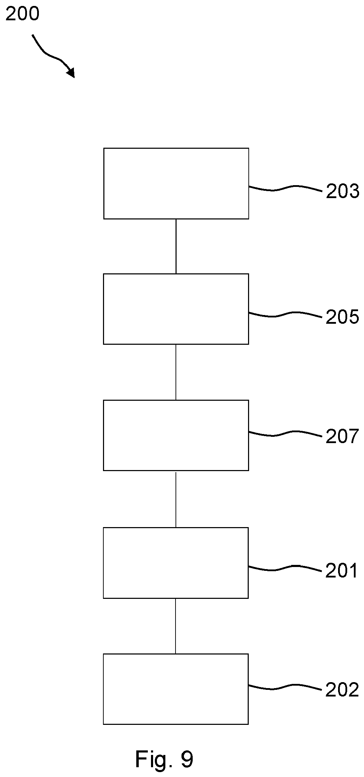

Fig. 9 illustrates method 200 of storing and/or transporting a rechargeable battery 2, such as a lithium-ion battery, using a container system 1 according to the present disclosure. Method 200 differs from method 100 in that method 200 comprises a step of providing 203 a plurality of container systems 1. The receiving space 7 of containers systems 1 of said plurality of container systems 1 have different predetermined volumes.

In an embodiment of method 200, the step of providing 203 comprises providing container systems 1 having a predetermined volume of the receiving space in the range of 450 dm3 to 2500 dm3.

Method 200 further comprises the step of determining 205 a maximum energy storage capacity in kilowatt-hour of said rechargeable battery 2.

In an embodiment of the method according to the present disclosure, wherein the step of determining 205 is performed before the step of providing 203, during the step of providing the plurality of container systems 1 the plurality of container systems 1 may be limited to a plurality of container systems 1 having a predetermined volume in the range of 5 - 15 times the energy storage capacity in kilowatt-hour multiplied by 1 dm3 and divided by 1 kWh.

During a step of selecting 207, comprised by method 200, a container system 1 of said plurality of container systems 1 is selected having a predetermined volume of said receiving space 7 in the range of 5 - 15 times the energy storage capacity in kilowatt-hour multiplied by 1 dm3 and divided by 1 kWh.

## Claims

1. A container system (1) arranged for storing and/or transporting a rechargeable battery (2), such as a lithium-ion battery, wherein said container system (1) comprises:
- a supporting assembly (31) arranged for supporting said container system (1) on a ground surface and comprising a support surface (33) arranged for supporting said rechargeable battery (2);
- a covering assembly (35), removably attachable to said supporting assembly (31), provided with:
- a receiving space (7) arranged for receiving, via a receiving opening (5) of said covering assembly (35), said rechargeable battery (2), wherein said receiving space (7) is partly delimited by a side wall arrangement (9) and a top wall arrangement (10), wherein said receiving opening (5) is provided at a side of said covering assembly (35) opposite to said top wall arrangement (10), wherein, in an assembled condition of said container system (1), said top wall arrangement (10) is connected, via said side wall arrangement (9), to said supporting assembly (31), wherein said side wall arrangement (9) is provided with a through hole (11); and
- a filtering arrangement (13) provided outside said receiving space (7) and arranged for receiving gasses (4), via said through hole (11), from said rechargeable battery (2) and filtering said gasses (4) originating from said rechargeable battery (2), wherein said filtering arrangement (13) is provided with a filter material (15) comprising glass fibres, preferably amorphous glass fibres.

2. The container system according to claim 1, wherein said container system (1) comprises a pressure release arrangement (19) arranged to maintain a pressure in said receiving space (7) below a predetermined pressure value, preferably wherein said pressure release arrangement (19) comprises a pressure relief valve.

3. The container system (1) according to claim 2, wherein said pressure relief valve (19) comprises an urging element, such as a spring, for biasing said pressure relief valve to a closed position wherein said pressure relief valve (19) is closed.

4. The container system (1) according to claim 3, wherein said urging element biases said pressure relief valve (19) to said closed position with a predetermined force.

5. The container system (1) according to any one of the preceding claims, wherein one of said supporting assembly (31) and said covering assembly (35) comprises a sealing arrangement (14) for detachably sealing said supporting assembly (31) and said covering assembly (35), preferably wherein said sealing arrangement (14) is arranged for realizing a hermitic seal of said sealing supporting assembly (31) and said covering assembly (35).

6. The container system (1) according to any one of the preceding claims, wherein said side wall arrangement (9) and/or said top wall arrangement (10) comprise an insulation material for thermally insulating said receiving space (7) from a surrounding of said container system (1), preferably wherein said supporting assembly (31) comprises further insulation material arranged to thermally insulate said receiving space (7), at a bottom side of said receiving space (7), from a surrounding of said container system (1).

7. The container system (1) according to any one of the preceding claims, wherein said filter material (15) comprises SiO2 in an amount between 70.0 wt.% and 80.0 wt.% and, preferably, CaO and MgO in a combined amount of between 20.0 wt.% and 30.0 wt.%, based on the weight of the filter material (15), preferably wherein said filtering material (15) is further arranged for thermally insulating said receiving space (7) from a surrounding of said container system (1).

8. The container system (1) according to any one of the preceding claims, wherein said container system (1) further comprises:
- a degassing arrangement (17) arranged for exhausting of gasses (4), filtered by said filtering arrangement (13), originating from said rechargeable battery (2), from said container system (1).

9. The container system (1) according to claim 2 and 8, wherein said degassing arrangement (17) comprises said pressure relief valve (19), wherein said pressure relief valve (19) is biased to a closed position wherein exhausting of gasses (4) originating from said receiving space (7) is blocked.

10. The container system (1) according to claim 9, wherein said urging element (21) biases said pressure relief valve (19) to said closed position with a predetermined force such that a maximum pressure in said receiving space (7) of said holder (3) is in the range of 0.05 - 0.15 barg, preferably 0.1 barg.

11. The container system (1) according to any one of the preceding claims, wherein said holder (3) comprises a top wall arrangement (23) provided with a ventilation space (25) arranged such that gasses (4) originating from said receiving space (7) are exhausted, via said ventilation space (25), from said container system (1), preferably wherein said ventilation
15 space (25) is arranged such that gasses (4) originating from said receiving space (7), are exhausted from said container system (1), via said pressure relief valve (19).

12. The container system (1) according to claim 11, wherein said ventilation space (25) is divided by partition walls (27), wherein said partition walls (27) are provided at a mutual distance such that a lifting organ, such as forks of a fork lift truck,
can be received, between neighbouring partition walls (27), in a lifting section (29) of said ventilation space (25) for lifting at least a part of said container system (1).

13. The container system (1) according to claim 12, wherein said pressure relief valve (19) is provided at a side of said neighbouring partition walls (27) facing away from said lifting section (29).

14. A method (100, 200) of storing and/or transporting a rechargeable battery (2), such as a lithium-ion battery, using a container system (1) according to any one of the preceding claims, said method (100, 200) comprising the steps of:
- supporting (101, 201), by said supporting surface (33) of said supporting assembly (31), said rechargeable battery (2);
- lowering (102, 202) said covering assembly (35) over said rechargeable battery (2) onto said supporting assembly (31) and receiving said rechargeable battery (2) in said receiving space (7).

15. The method (200) according to claim 14, wherein the method further comprises the steps of:
- providing (203) a plurality of container systems (1) according to any one of the claims 1 - 14, wherein said receiving space (7) of containers systems (1) of said plurality of container systems (1) have different predetermined volumes;
- determining (205) a maximum energy storage capacity in kilowatt-hour of said rechargeable battery (2);
- selecting (207) a container system (1) of said plurality of container systems (1) provided with a predetermined volume of said receiving space (7) is in the range of 5 - 15 times said energy storage capacity in kilowatt-hour multiplied by 1 dm3 and divided by 1 kWh, preferably in the range of 9 - 11 times said energy storage capacity in kilowatt-hour multiplied by 1 dm3 and divided by 1 kWh.
